# FASCICULE DE BREVET EUROPEEN

(11) **EP 3 473 000 B1**
(45) Date de publication et mention de la délivrance du brevet: **17.02.2021**
(21) Numéro de dépôt: 17740052.0
(22) Date de dépôt: 16.06.2017
(51) Int. Cl.: H04N 5/247, H04N 5/262

(54) **PROCÉDÉ ET SYSTÈME DE PRISE DE VUES A L'AIDE D'UN CAPTEUR VIRTUEL**
BILDAUFNAHMEVERFAHREN UND SYSTEM UNTER VERWENDUNG EINES VIRTUELLEN SENSORS
IMAGE CAPTURE METHOD AND SYSTEM USING A VIRTUAL SENSOR

(30) Priorité: 17.06.2016 FR 1655669
(43) Date de publication de la demande: 24.04.2019
(73) Titulaire: Courtès, Alexandre, 75009 Paris (FR)
(72) Inventeur: Courtès, Alexandre, 75009 Paris (FR)
(74) Mandataire: Santarelli
(86) Numéro de dépôt international: PCT/FR2017/051589
(87) Numéro de publication internationale: WO 2017/216503

(56) Documents cités:
- WO-A1-2006/024078
- WO-A1-2008/151416
- DE-A1-102014 010 756
- US-A1- 2015 264 258

## Description

### DOMAINE DE L'INVENTION

La présente invention concerne des systèmes de prise de vues, pouvant par exemple équiper des circuits ou parcours de sport de vitesse.

Elle concerne en particulier un procédé de prise de vues à l'aide d'un capteur virtuel pour le suivi d'un sportif ou d'un équipement sportif se déplaçant à grande vitesse sur un parcours prédéterminé, le procédé permettant la production d'une séquence vidéo, ainsi qu'un système de prise de vues.

### CONTEXTE DE L'INVENTION

La capture d'images, intervient dans de nombreuses applications nécessitant la satisfaction de contraintes de plus en plus spécifiques. Des exemples et modes de réalisation de l'état de la technique sont décrits dans US 2015/0264258.

Un exemple d'application est la capture vidéo d'un objet (ou sujet) se mouvant à très grande vitesse typiquement dans un contexte de sport à grande vitesse, par exemple un sportif (par exemple un skieur) ou un équipement sportif tel qu'un ballon ou un véhicule de course automobile. Un tel véhicule peut rouler à des vitesses de l'ordre de 300 km/heure.

La capture vidéo d'un tel sujet, par exemple pour la télévision ou le cinéma, est généralement effectuée à l'aide d'un autre véhicule (e.g. un drone) portant un dispositif d'acquisition vidéo et se déplaçant à une vitesse similaire de sorte à suivre le sportif ou son véhicule (« travelling » en anglais).

Toutefois, compte-tenu des vitesses de déplacement en jeu, par exemple de l'ordre de plusieurs centaines de km/heure pour un véhicule, le pilotage du système de suivi exige une certaine dextérité, et n'offre qu'une faible marge de manœuvre en matière de prise de vues (l'angle de vue est prédéterminé) et de mise au point. Par exemple, un changement de mise au point se fait généralement à l'aide d'un zoom sur le sportif ou son véhicule, ce qui a pour effet d'annuler l'impression de vitesse pour le spectateur.

De plus, la circulation de systèmes de suivi à proximité du sportif peut entrainer des problèmes de sécurité. En effet, le système de suivi peut malencontreusement gêner et percuter le sportif ou l'équipement sportif en raison d'une erreur de pilotage ou d'un problème mécanique au niveau du système de suivi. En outre, la circulation d'un ou plusieurs systèmes de suivi sur le parcours (ou circuit) peut nuire à la bonne visibilité qu'a le sportif de ce parcours et ainsi augmenter le risque d'accident. Il existe donc un besoin d'améliorer la fiabilité, la sécurité et la flexibilité des systèmes de capture vidéo existant pour filmer des sportifs (ou leurs équipements/véhicules) se déplaçant à très grande vitesse.

### RESUME DE L'INVENTION

La présente invention a ainsi pour objet de pallier au moins un de ces inconvénients.

Dans ce contexte, un premier aspect de l'invention concerne un procédé de prise de vues à l'aide d'un capteur virtuel pour le suivi d'un sportif ou d'un équipement sportif se déplaçant à grande vitesse le long d'un parcours prédéterminé d'une scène, mis en œuvre dans un système de prise de vues. Ce système de prise de vues comprend une pluralité de dispositifs d'acquisition d'images à champ large disposés chacun à une position fixe différente le long du parcours prédéterminé, de sorte que les images capturées à un instant donné par deux dispositifs d'acquisition différents représentent des points de vue différents du sportif ou de l'équipement sportif évoluant le long du parcours prédéterminé. Le procédé comprend les étapes suivantes :
- capture en temps réel d'images représentatives d'une zone de l'espace sensiblement équivalente au parcours prédéterminé, par chaque dispositif d'acquisition de ladite pluralité ;
- sélection, pour chaque instant d'une pluralité d'instants successifs, d'un dispositif d'acquisition donné et d'une partie de l'image capturée par celui-ci audit instant ; et
- reconstruction, à partir des parties d'image sélectionnées, d'une séquence vidéo similaire à celle qui aurait été capturée par un dispositif d'acquisition se déplaçant le long dudit parcours.

Ainsi, ce procédé permet la capture d'une pluralité images de la même scène au même instant mais ayant des points de vue différents, offrant ainsi un large choix de plans à un opérateur et lui permettant également de faire varier la vitesse relative du sujet et du capteur virtuel dans la séquence vidéo reconstruite.

Corrélativement, un deuxième aspect de l'invention concerne un système de prise de vues à l'aide d'un capteur virtuel pour le suivi d'un sportif ou d'un équipement sportif se déplaçant à grande vitesse le long d'un parcours prédéterminé d'une scène. Ce système comprend :
- une pluralité de dispositifs d'acquisition d'images à champ large disposés chacun à une position fixe différente le long du parcours prédéterminé, de sorte que les images capturées à un instant donné par deux dispositifs d'acquisition différents représentent des points de vue différents du sportif ou de l'équipement sportif évoluant sur le parcours prédéterminé, chaque dispositif d'acquisition comprenant des moyens de capture en temps réel d'images représentative d'une zone de l'espace sensiblement équivalente au parcours prédéterminé ;
- un dispositif de traitement d'images configuré pour :
   - obtenir des images capturées en temps réel par les dispositifs d'acquisition ;
   - sélectionner, pour chaque instant d'une pluralité d'instants successifs, une partie de l'image capturée audit instant par un dispositif d'acquisition donné ; et
   - reconstruire, à partir des parties d'image sélectionnées, une séquence vidéo similaire à celle qui aurait été capturée par un dispositif d'acquisition se déplaçant le long dudit parcours.

Avantageusement, le système de prise de vue permet une bonne flexibilité dans la reconstruction de la séquence vidéo, tout en évitant les problèmes de sécurité et d'accident puisque les dispositifs d'acquisition sont fixes le long du parcours et ne circulent pas à proximité du sportif comme dans l'art antérieur.

D'autres caractéristiques du procédé et du système selon des modes de réalisation de l'invention sont décrites dans les revendications dépendantes.

Dans un mode particulier de réalisation, la vitesse relative du sportif ou de l'équipement sportif et du capteur virtuel varie au cours de la séquence vidéo reconstruite.

Dans un mode particulier de réalisation, le procédé comprend une étape préliminaire de mise en place du système de prise de vues comprenant les étapes suivantes :
- l'installation des dispositifs d'acquisition de la pluralité le long du parcours prédéterminé, de sorte que chaque dispositif d'acquisition filme une zone de l'espace sensiblement équivalente au parcours prédéterminé, et de sorte que les images capturées à un instant donné par deux dispositifs d'acquisition différents représentent des points de vue différents du sportif ou de l'équipement sportif évoluant sur le parcours prédéterminé ; et
- le paramétrage d'un dispositif de traitement d'images auquel chaque dispositif d'acquisition de la pluralité est connecté, avec des données de position relative des dispositifs d'acquisition de la pluralité.

Dans un mode particulier de réalisation, le procédé comprend en outre une étape de traitement des parties d'image sélectionnées afin d'éviter les sauts d'image entre deux instants successifs de la séquence vidéo.

Ceci peut être fait à l'aide d'une fonction de linéarisation calculée au moment de la mise en place du système, par exemple à partir d'images du parcours seul (c'est-à-dire dans le sportif ou l'équipement sportif, juste le décor). Selon un mode particulier, ce traitement peut de plus utiliser un algorithme de *tracking* permettant de fixer la distance relative entre le capteur virtuel et le sportif ou encore la vitesse relative entre ces deux éléments.

Corrélativement, dans un mode de réalisation particulier, le dispositif de traitement du système de prise de vue est configuré pour traiter les parties d'image sélectionnées afin d'éviter les sauts d'image entre deux instants successifs de la séquence vidéo.

Dans un mode particulier de réalisation, le procédé comprend en outre une étape de correction de la distorsion optique des images capturées par les dispositifs d'acquisition.

Corrélativement, dans un mode de réalisation particulier, le dispositif de traitement est en outre configuré pour corriger la distorsion optique des images capturées par les dispositifs d'acquisition.

Dans un mode particulier de réalisation, le procédé comprend outre une étape de mémorisation dans le système pendant une durée prédéterminée desdites images capturées, afin de permettre la mise en oeuvre ultérieure de nouvelles étapes de sélection et de reconstruction, à partir des images mémorisées.

Ceci permet la reconstruction d'une séquence vidéo *a posteriori,* par exemple pour revenir sur une action passée avec des paramètres spécifiques (angle de vue, vitesse, zoom, cadrage...).

Dans un mode particulier de réalisation, le système de prise de vues comprend en outre une interface homme-machine comprenant des moyens de visualisation configurés pour afficher l'ensemble des dispositifs d'acquisition en association avec les images capturées par ces dispositifs d'acquisition.

Dans un mode particulier de réalisation, l'interface homme-machine comprend en outre des moyens de commutation configurés pour commuter d'un dispositif d'acquisition donné à un autre de sorte à générer une commande de sélection à l'attention du dispositif de traitement.

Dans un mode particulier de réalisation, les moyens de commutation sont configurés pour commuter d'un dispositif d'acquisition donné à un autre dispositif d'acquisition en fonction d'une partie d'image sélectionnée via l'interface homme-machine, les moyens de visualisation étant en outre configurés pour afficher un élément de signalisation délimitant la partie d'image sélectionnée.

Les avantages, buts et caractéristiques particulières du système sont similaires à ceux du procédé précité.

Dans un mode particulier de réalisation, les différentes étapes du procédé précité sont déterminées par des instructions de programmes d'ordinateurs.

En conséquence, l'invention vise aussi un programme d'ordinateur sur un support d'information, ce programme étant susceptible d'être mis en oeuvre par un microprocesseur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un microprocesseur, et comprenant des instructions d'un programme d'ordinateur tel que mentionné ci-dessus.

Le support d'information peut être n'importe quelle entité ou dispositif capable de stocker le programme. Par exemple, le support peut comprendre un moyen de stockage, tel qu'une ROM (acronyme de Read Only Memory en anglais), par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'information peut être un circuit intégré dans lequel le programme est incorporé, le circuit étant adapté pour exécuter ou pour être utilisé dans l'exécution du procédé en question.

Le support d'information et le programme d'ordinateur précités présentent des caractéristiques et avantages analogues au procédé qu'ils mettent en œuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **Figure 1** représente schématiquement un contexte dans lequel des modes de réalisation particuliers de l'invention peuvent être mis en oeuvre ;
- la **Figure 2** représente schématiquement une série d'images résultant d'étapes de capture en temps réel selon des modes de réalisation particuliers de l'invention ;
- la **Figure 3** représente schématiquement le résultat d'étapes de sélection de parties d'images basées sur la série d'images de la Figure 2 ;
- la **Figure 4** représente des étapes générales d'un procédé de prise de vues selon des modes de réalisation particuliers de l'invention ;
- la **Figure 5** illustre un exemple d'architecture matérielle pour un système de prise de vues conforme à des modes de réalisation particuliers de l'invention.

### DESCRIPTION DETAILLEE DE L'INVENTION

De façon générale, la présente invention permet d'effectuer un « travelling » virtuel, permettant à un utilisateur du système de prise de vues (typiquement un cadreur) de naviguer virtuellement dans un canal vidéo, c'est-à-dire de changer de point de vue en temps réel et par exemple de modifier virtuellement la vitesse ou la direction du déplacement d'un capteur virtuel.

Grâce à la présente invention, il est possible d'obtenir des images similaires à celles obtenues par le suivi du sujet (e.g. un sportif ou un équipement sportif), par exemple parallèlement à son mouvement, avec l'avantage supplémentaire de pouvoir modifier la vitesse relative du capteur virtuel par rapport à l'objet en déplacement.

Ainsi, davantage de points de vue différents peuvent être envisagés au cours d'une même capture vidéo que dans l'art antérieur.

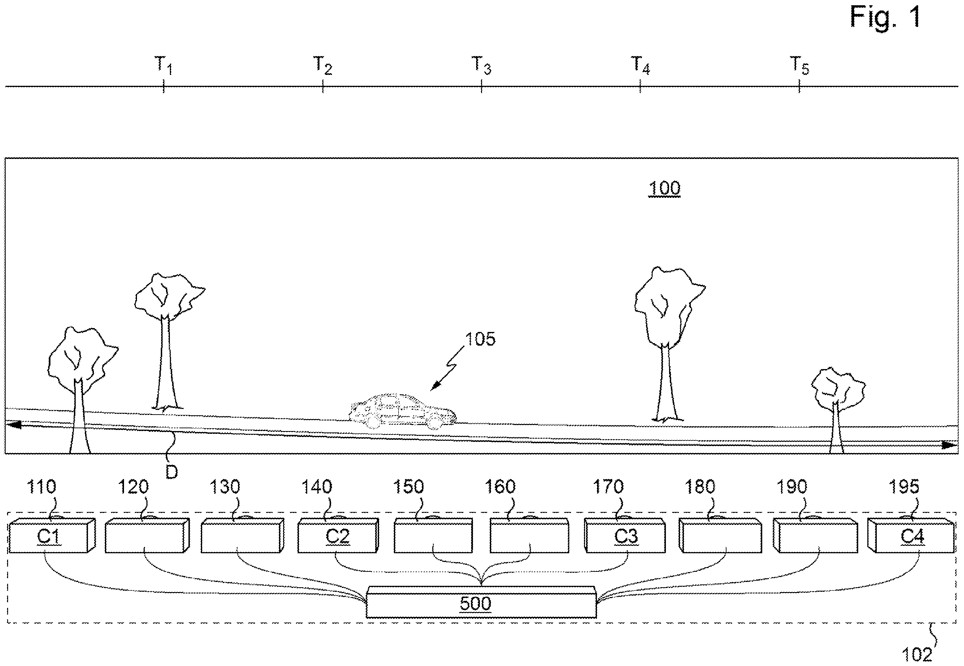

La **Figure 1** représente schématiquement un contexte dans lequel des modes de réalisation de l'invention peuvent être mis en oeuvre.

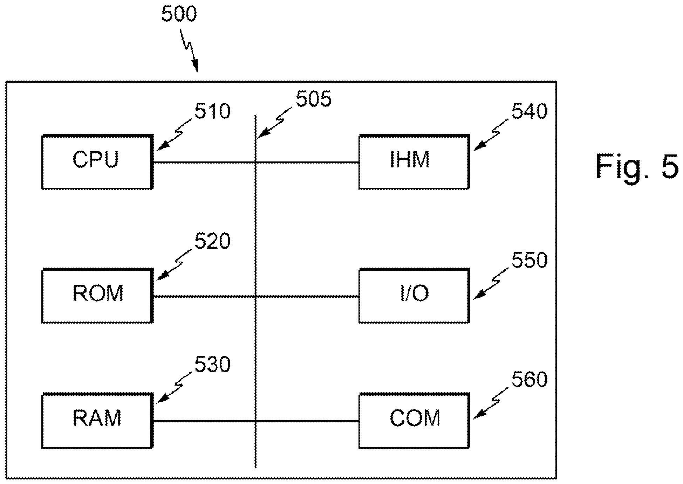

En particulier, il s'agit d'un contexte dans lequel un système de prise de vues conforme à des modes de réalisation peut être installé. Le système de prise de vues sera décrit en détail en référence à la Figure 5.

Dans cet exemple, un parcours (ou circuit) d'une scène 100 de longueur linéaire D est considéré. Un sportif ou un équipement sportif, ici une voiture de course 105, évolue à grande vitesse sur ce parcours prédéterminé. Le long de ce parcours est installé un système de prise de vues 102 conforme à l'invention.

Ce système de prise de vues 102 comprend notamment une pluralité de dispositifs d'acquisition d'images à champ large 110, 120, 130, 140, 150, 160, 170, 180, 190, 195 disposés chacun à une position fixe différente le long du parcours prédéterminé. La présente invention n'est pas limitée au nombre de dispositifs représentés sur cette figure qui n'est fournie que dans un but illustratif.

Dans certains modes de réalisation, les dispositifs d'acquisition sont disposés à intervalles réguliers le long du parcours, comme représenté sur la figure. Toutefois, ceci n'est pas une obligation et selon d'autres modes de réalisation, ils sont disposés de façon irrégulière.

La distance entre les dispositifs d'acquisition peut être choisie en fonction de la vitesse du sportif ou de l'équipement et/ou de la longueur du parcours à couvrir.

Les dispositifs d'acquisition sont capables de filmer la scène 100 avec des points de vue relativement différents. En particulier, ils filment chacun une zone correspondant à peu près au parcours de longueur D.

Chaque dispositif d'acquisition dispose de moyens de capture en temps réel d'images représentative d'une zone de l'espace sensiblement équivalente au parcours prédéterminé. Pour ce faire, les dispositifs d'acquisition fonctionnent en continu et sont reliés à un module de traitement d'images (non représenté) qui stocke et traite les images en continu, comme il sera expliqué en référence aux figures suivantes. Dans certains modes de réalisation, les dispositifs d'acquisition mettent en oeuvre localement certains traitements (e.g. correction) tandis que le module de traitement effectue d'autres traitements de manière centralisée. On pourrait également envisager que certains dispositifs d'acquisition donnés ayant la puissance de calcul nécessaire réalisent une partie des traitements localement, par exemple pour d'autres dispositifs d'acquisition.

Ces dispositifs d'acquisition d'images sont de préférence des caméras vidéo équipées d'un objectif hypergone ou « *fisheye* » en anglais. Un tel objectif se caractérise par une distance focale relativement courte et donc un important angle de champ pouvant aller jusqu'à environ 180° dans la diagonale, voire dans toute l'image. D'autres objectifs peuvent être envisagés, par exemple ayant un angle de champ supérieur à 180°, typiquement utilisés pour des applications utilisant le format d'image IMAX (IMAX est une marque).

Selon l'invention, chacun des dispositifs d'acquisition est disposé de sorte que les images capturées à un instant donné par deux dispositifs d'acquisition différents représentent des points de vue différents de la voiture de course 105 évoluant sur le parcours.

Dans cet exemple, on suppose que la voiture 105 se trouve sur le parcours au niveau du marqueur T₁ au temps t₁, au niveau du marqueur T₂ au temps t₂, au niveau du marqueur T₃ au temps t₃, au niveau du marqueur T₄ au temps t₄, et au niveau du marqueur T₅ au temps t₅.

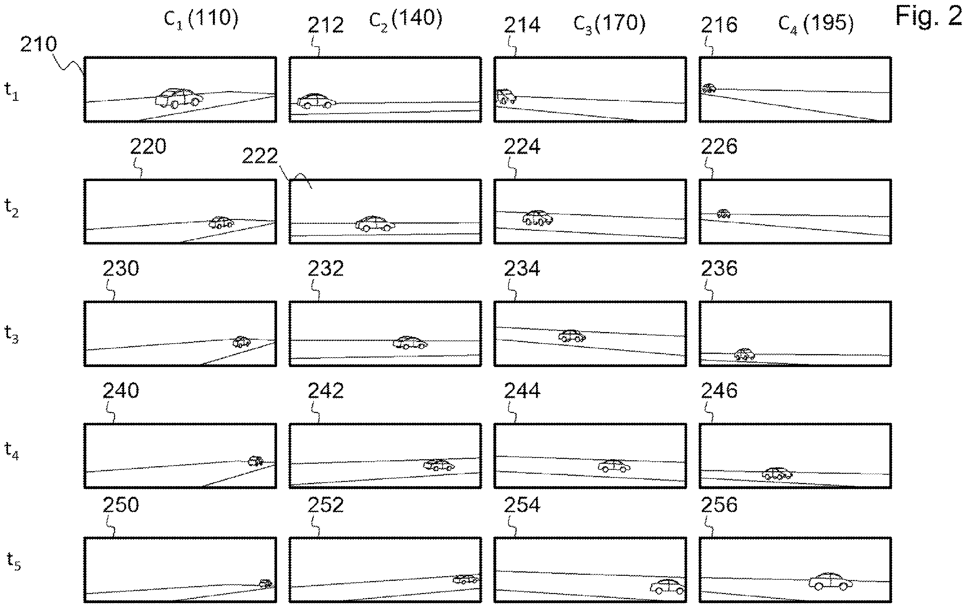

Ainsi, comme représenté sur la **Figure 2****,** les dispositifs d'acquisition C₁ (110), C₂ (140), C₃ (170) et C₄ (195) capturent, à un instant t₁, quatre vues différentes référencées respectivement 210, 212, 214, 216, de la voiture 105 sur le parcours.

En raison de la position respective des dispositifs d'acquisition C₁ (début du parcours), C₂ (première moitié du parcours), C₃ (seconde moitié du parcours) et C₄ (fin du parcours) sur le parcours, la voiture 105 est vue, à un instant donné, de derrière par le dispositif d'acquisition C₁, de côté par les dispositifs d'acquisition C₂ et C₃, et de devant par le dispositif d'acquisition C₄. Ainsi, en supposant que le parcours est rectiligne, les dispositifs d'acquisition C1, C2, C3 et C4 filment respectivement l'intégralité du parcours et chacun a en son champ le début, le milieu et la fin du parcours.

A un instant t₂ ultérieur à t₁, les dispositifs d'acquisition C₁ (110), C₂ (140), C₃ (170) et C₄ (195) capturent quatre (autres) vues différentes référencées respectivement 220, 222, 224, 226, de la voiture 105 sur le parcours.

De manière similaire :
- à un instant t₃ ultérieur à t₂, les dispositifs d'acquisition C₁ (110), C₂ (140), C₃ (170) et C₄ (195) capturent quatre (autres) vues différentes référencées respectivement 230, 232, 234, 236, de la voiture 105 sur le parcours ;
- à un instant t₄ ultérieur à t₃, les dispositifs d'acquisition C₁ (110), C₂ (140), C₃ (170) et C₄ (195) capturent quatre (autres) vues différentes référencées respectivement 240, 242, 244, 246, de la voiture 105 sur le parcours ;
- à un instant t₅ ultérieur à t₁, les dispositifs d'acquisition C₁ (110), C₂ (140), C₃ (170) et C₄ (195) capturent quatre (autres) vues différentes référencées respectivement 250, 252, 254, 256, de la voiture 105 sur le parcours.

Ainsi, le système de prise de vues selon l'invention permet, à un instant donné, de disposer de plusieurs angles de vue d'un même objet, ce que ne permet pas un système de *travelling* de l'art antérieur.

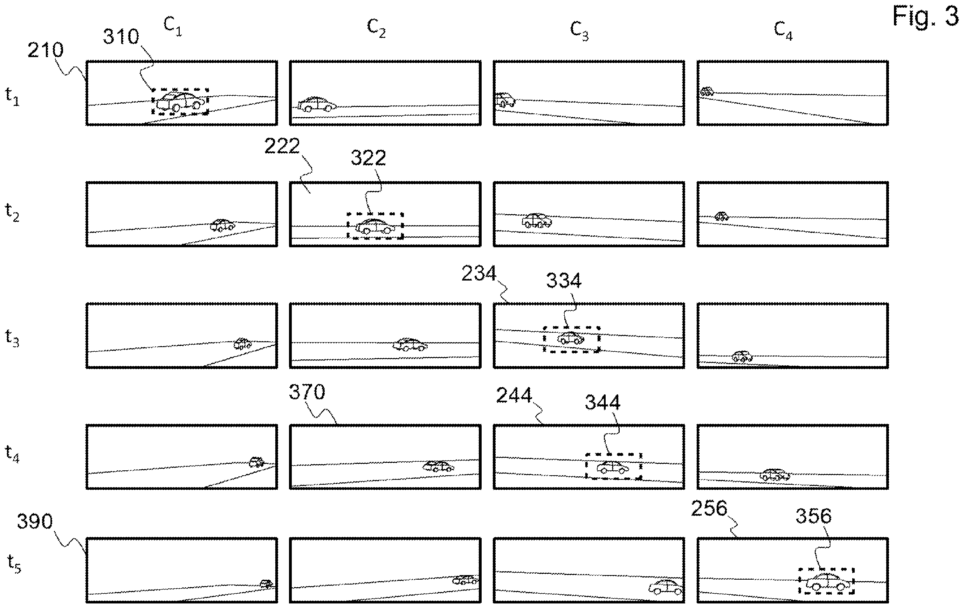

Comme représenté sur la **Figure 3****,** le système de prise de vues selon l'invention permet de choisir, en temps réel, l'angle de vue et la portion d'image désirés, afin de reconstituer une séquence vidéo capturée par un capteur fictif (capteur virtuel) se déplaçant virtuellement le long dudit parcours, selon les paramètres de vitesse et d'angle de vue choisis par un utilisateur, à partir des images disponibles issues des différents dispositifs d'acquisition.

Ainsi, par exemple, à l'instant t₁, la portion d'image 310 de l'image 210 capturée par le dispositif d'acquisition C₁ (110) est sélectionnée, tandis qu'à l'instant t₂, la portion d'image 322 de l'image 222 capturée par le dispositif d'acquisition C₂ (140) est sélectionnée, ces deux dispositifs d'acquisition ayant des points de vue différents du même parcours. Aux instants t₃ et t₄, les portions d'images 334 et 344 des images 234 et 244 capturées successivement par le dispositif d'acquisition C₃ (170) sont sélectionnées. Ainsi, ces images sont prises du même point de vue. A l'instant t₅, la portion d'image 356 de l'image 256 capturée par le dispositif d'acquisition C₄ est sélectionnée. Le point de vue est alors de nouveau différent.

Les portions d'image sélectionnées sont alors arrangées en séquence en fonction des instants correspondants, formant ainsi une séquence vidéo. Cette séquence vidéo reconstruite à partir des portions d'image sélectionnées combine ainsi plusieurs angles de vue de sorte que le rendu visuel pour le spectateur est beaucoup plus attractif que dans l'art antérieur car il permet de restituer la vitesse de la voiture 105 avec une certaine fidélité, tout en évitant les problèmes de sécurité et de fiabilité liés aux systèmes de prise de vues classiques. En outre, le point de vue à restituer à un instant donné peut être choisi a *posteriori.*

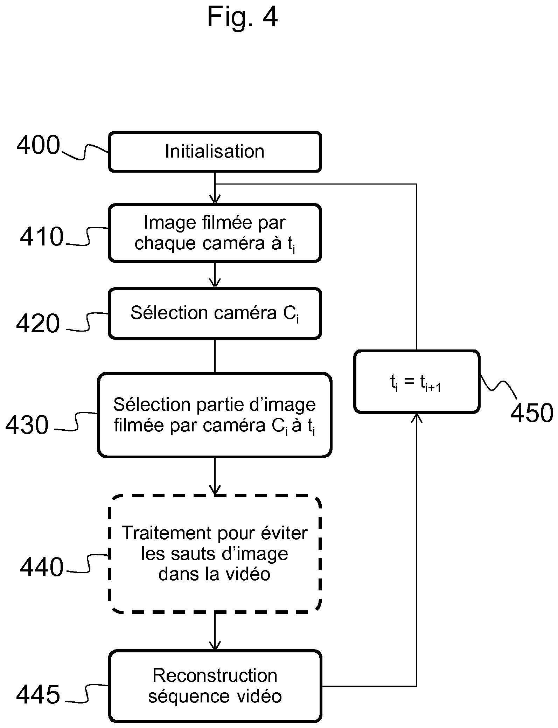

La **Figure 4** représente des étapes générales d'un exemple de procédé de prise de vues conforme à des modes de réalisation particuliers de l'invention. Ces étapes sont typiquement mises en oeuvre dans un système de prise de vues, par exemple tel que décrit en référence à la Figure 1.

Au cours d'une étape préliminaire 400, le système de prise de vues 102 est mis en place le long du parcours sur lequel un sportif ou un équipement sportif tel que la voiture 105 évolue à grande vitesse.

En pratique, cette étape comprend l'installation des dispositifs d'acquisition le long du parcours, de sorte que chaque dispositif d'acquisition filme une zone de l'espace sensiblement équivalente audit parcours, et de sorte que les images capturées à un instant donné par deux dispositifs d'acquisition différents représentent des points de vue différents du sportif ou de l'équipement sportif évoluant sur le parcours. Ainsi, les dispositifs d'acquisition sont disposés de manière à présenter un recouvrement de champ tel que la longueur D du parcours soit couverte en continu.

Ensuite, les dispositifs d'acquisition sont connectés à un dispositif de traitement d'images. Ce dispositif de traitement est ensuite paramétré avec des données de configuration des dispositifs d'acquisition ainsi installés. Ces données de configuration comprennent par exemple la position relative des dispositifs d'acquisition ainsi que des données de synchronisation et de calibration (e.g. luminosité, température des couleurs, cadrage et déformations).

Autrement dit, ces données permettent de paramétrer les différents dispositifs d'acquisition afin que les images du parcours capturées par ceux-ci 'concordent'. Ceci peut être effectué au moyen de prises de vues du parcours seul, c'est-à-dire sans la présence d'éléments tels qu'une voiture ou une personne.

Le paramétrage peut ainsi comprendre une étape de détection d'une série de points de référence (*registration marks* en anglais) pour chaque paire de dispositifs d'acquisition. Ceci permet de pré-calculer une fonction de linéarisation en vue de faciliter les opérations de lissage d'une image à une autre et ainsi éviter les sauts entre des images successives de la séquence vidéo (voir étape 440 décrite ci-après), qui seraient issues de capteurs différents. Autrement dit, un algorithme peut être appliqué aux prises de vues du parcours seul, afin de corriger les images issues des divers dispositifs d'acquisition pour assurer une certaine cohérence entre elles. On s'assure par exemple que l'horizontalité du parcours est la même pour tous les dispositifs d'acquisition. En pratique, ceci peut être fait par comparaison des images du parcours seul capturées par les différents dispositifs d'acquisition avec l'image du parcours seul capturée par un dispositif d'acquisition de référence, par exemple situé au milieu du parcours. Selon un mode de réalisation, ce paramétrage est essentiellement numérique.

Ces données sont importantes pour traiter les flux vidéo provenant des différents dispositifs d'acquisition, comme expliqué ci-après.

Par la suite, chaque dispositif d'acquisition capture en temps réel, c'est-à-dire en continu, des images représentatives de la zone susmentionnée, sensiblement équivalente au parcours observé.

Les étapes suivantes du procédé représenté sont mises en oeuvre itérativement, à chaque instant tᵢ.

Au cours d'une étape 410, le dispositif de traitement récupère les images capturées par les différents dispositifs d'acquisition à l'instant tᵢ considéré.

Par exemple, à l'instant tᵢ = t₁, il s'agit de récupérer les images 210, 212, 214, 216 représentées sur la Figure 2, ainsi que les images capturées à l'instant t₁ par les autres dispositifs d'acquisition, c'est-à-dire ici tous les dispositifs d'acquisition 110 à 195 du système 102.

En pratique, une étape de correction de la distorsion optique des images capturées par les dispositifs d'acquisition peut être mise en oeuvre. En effet, comme précédemment mentionné, les dispositifs d'acquisition sont préférentiellement équipés d'objectifs *fisheye,* lesquels permettent d'obtenir une image de forme ronde, dont l'aplanissement entraine des déformations optiques importantes, notamment dans la périphérie de l'image.

Un algorithme de *mapping* peut être appliqué à de telles images. Un tel algorithme consiste par exemple à définir un format de destination pour l'image à corriger et à déterminer les coordonnées des pixels dans le repère de destination en fonction des coordonnées de ces pixels dans l'image source (c'est-à-dire à corriger). Il existe de nombreux algorithmes permettant d'effectuer une telle correction.

Au cours d'une étape 420, un dispositif d'acquisition donné, noté Cᵢ, est sélectionné. Par exemple, à l'instant tᵢ = t₁, le dispositif d'acquisition 110 représenté sur la Figure 1 peut être sélectionné.

Cette sélection peut se faire de deux façons : soit automatiquement en fonction de paramètres prédéterminés par un opérateur au cours d'une étape préliminaire ou au cours du procédé (par exemple un cadreur), soit en temps réel par l'opérateur, via une interface homme-machine du système 102, par exemple une pédale, une manette, un bouton ou encore un écran tactile.

Par exemple, le paramètre prédéterminé par un opérateur peut être la vitesse relative du capteur virtuel réalisé et du véhicule observé 105. Ainsi la sélection du dispositif d'acquisition à un instant donné est effectuée automatiquement par le système de sorte à respecter cette vitesse relative au cours de la séquence vidéo à reconstruire.

Dans un mode de réalisation particulier, des scripts prédéterminés de sélection définissant une grammaire de cadrage (par exemple « *travelling* avant », *« travelling* arrière », « *travelling* latéral », « plan large », « plan moyen », « plan serré », bien connus de l'homme du métier) sont mis en oeuvre et l'opérateur déclenche leur exécution via l'interface homme-machine, par exemple en appuyant sur un bouton ou une pédale. De tels scripts peuvent être mis en oeuvre pour une séquence vidéo, c'est-à-dire pour plusieurs ou toutes les itérations considérées. Ces scripts sont par exemple chargés dans le dispositif de traitement au moment de l'étape préliminaire 400 d'installation du système 102. L'opérateur exprime alors sa créativité sous forme de supervision des options génératives.

Dans un autre mode de réalisation particulier, dans lequel l'interface homme-machine comprend des moyens de visualisation, par exemple un écran tactile, configurés pour afficher l'ensemble des dispositifs d'acquisition en association avec les images capturées par ces dispositifs d'acquisition, la sélection peut se faire manuellement par l'opérateur et peut consister à naviguer successivement d'un dispositif d'acquisition à un autre au moyen de moyens de commutation et à s'arrêter sur le dispositif d'acquisition finalement sélectionné, de sorte à générer une commande de sélection à l'attention du dispositif de traitement.

Ainsi, dans ce mode, l'opérateur sélectionne directement un dispositif d'acquisition donné en fonction de l'aspect visuel des images qu'il capture. Un intérêt particulier de ce mode de prise du vues réside dans son aspect pilotage, et dans le contrôle créatif qu'il offre à un opérateur humain. En particulier, l'opérateur peut contrôler plusieurs aspects de la séquence vidéo, notamment en pilotant le cadrage, le zoom, l'angle de vue, le sens du déplacement, ainsi que la vitesse de déplacement relative du capteur virtuel par rapport à l'objet en déplacement (c'est-à-dire le sportif ou l'équipement sportif).

Au cours d'une étape 430, une portion ou partie de l'image filmée à l'instant tᵢ par le dispositif d'acquisition sélectionné Cᵢ est sélectionnée.

Par exemple, à l'instant tᵢ = t₁, la portion d'image 310 représentée sur la Figure 3 peut être sélectionnée.

Dans des modes de réalisation, l'opérateur peut sélectionner une partie d'image via l'interface homme-machine, et les moyens de commutation précités sont configurés pour commuter en fonction de la partie d'image sélectionnée. Dans ce cas, les moyens de visualisation étant en outre configurés pour afficher un élément de signalisation délimitant la partie d'image sélectionnée (e.g. 310 sur la Figure 3).

Ainsi, le dispositif de visualisation permet à l'utilisateur du système 102 (e.g. le cadreur) de naviguer dans l'image capturée par le dispositif d'acquisition sélectionné afin d'y sélectionner une portion définie par un cadre plus ou moins zoomé qu'il pilote à son gré. Pour ce faire, il a la possibilité de déplacer son cadre à loisir, par exemple de gauche à droite, et de haut en bas, sur l'image affichée par les moyens de visualisation (e.g. écran).

Selon un exemple particulier, la portion d'image filmée à un instant donné peut être sélectionnée automatiquement en fonction d'une vitesse relative du capteur virtuel réalisé et du véhicule observé 105 prédéfinie. Ainsi la sélection de la portion d'image à un instant donné est effectuée automatiquement par le système de sorte à respecter cette vitesse relative au cours de la séquence vidéo à reconstruire.

Au cours d'une étape 440 optionnelle, la partie d'image sélectionnée est traitée afin d'éviter les sauts d'image entre deux instants successifs (e.g. tᵢ et tᵢ₋₁) de la séquence vidéo. Ce traitement de linéarisation permet d'assurer une transition fluide entre les différentes images d'une séquence vidéo.

Pour ce faire, plusieurs types de traitement peuvent être appliqués afin de mieux appréhender la vitesse des sportifs ou équipements sportifs filmés. Ces traitements peuvent par exemple utiliser la fonction de linéarisation pré-calculée au cours de l'étape préliminaire susmentionnée. Leur but est de lisser la transition entre deux portions d'images sélectionnées. A titre d'exemple, ceci permet de s'assurer que la même horizontale est partagée par tous les dispositifs d'acquisition.

Afin d'améliorer la transition entre portions d'images, il est par exemple possible d'utiliser un enregistrement des commandes de sélection résultant de l'action de l'opérateur sur l'interface homme-machine au cours de plusieurs itérations successives. A titre d'illustration, lorsque ces commandes résultent du mouvement d'une manette le long d'une rainure, il est possible d'effectuer par exemple une simple moyenne de ces commandes ou d'appliquer un filtre passe-bas sur ces commandes afin d'éviter les à-coups et autres saccades entre les portions d'image sélectionnées. Dans ce cas, le lissage se fait sur plusieurs itérations successives.

Selon un autre exemple, un algorithme de suivi (*tracking* en anglais) peut être utilisé pour détecter et suivre un sportif ou un équipement sportif et ainsi permettre à l'opérateur de piloter le capteur virtuel de façon relative à un véhicule dans le champ.

En effet, le *tracking* permet de suivre un sportif (ou un équipement) et donc de piloter le capteur virtuel en fixant une distance relative ou une vitesse relative entre ceux-ci (notion « d'accrochage » du capteur virtuel au sujet observé).

Le *tracking* permet avantageusement d'éviter les sauts d'image dans le temps lorsque la vitesse de déplacement du sportif ou de l'équipement permet la captation d'un nombre suffisant d'images en fonction de l'espacement des dispositifs d'acquisition, soit par exemple pour une caméra *fish eye* classique, 25 images/s.

Ensuite, à l'instant suivant (450), les étapes 410 à 440 sont réitérées de sorte à permettre la reconstruction progressive (445), à partir des parties d'image sélectionnées au cours des différentes itérations, d'une séquence vidéo similaire à celle qui aurait été capturée par un dispositif d'acquisition se déplaçant le long dudit parcours.

Ainsi par exemple, les portions d'images 310, 322, 334, 344 et 356 représentées sur la Figure 3 peuvent constituer une séquence vidéo issue de plusieurs itérations des étapes précitées.

En fonction de la distance entre les dispositifs d'acquisition disposés le long du parcours dont les portions d'images sont sélectionnées, la vitesse relative du sportif ou de l'équipement sportif et du capteur virtuel peut varier au cours de la séquence vidéo reconstruite sans nécessiter d'interpolation. Autrement dit, il est possible de faire varier l'impression de vitesse dans la séquence vidéo en sélectionnant des portions d'images capturées par des dispositifs d'acquisition plus ou moins éloignés les uns des autres. Ainsi, plus la distance entre les dispositifs d'acquisition dont les portions d'images sont sélectionnées augmente, plus la vitesse augmente. De manière correspondante, plus les dispositifs d'acquisition sont nombreux sur le parcours, plus ils sont proches les uns des autres et plus l'impression de vitesse relative peut être élevée.

Dans un mode de réalisation, les images capturées par les dispositifs d'acquisition sont gardées en mémoire du système pendant une durée prédéterminée, de sorte à permettre à l'opérateur de reconstruire une séquence vidéo *a posteriori,* par exemple pour revenir sur une action passée avec des paramètres spécifiques (angle de vue, vitesse, zoom, cadrage...). Par exemple, la durée prédéterminée peut être de quelques minutes à 10 minutes ou plus. Le buffer utilisé pour ce faire peut remplacer les données stockées au bout de cette durée prédéterminée. Cette durée prédéterminée peut être sélectionnée par l'opérateur ou par défaut elle peut être imposée par les capacités du système.

La **Figure 5** illustre un exemple d'architecture matérielle pour le ou les éléments constitutifs d'un système de prise de vues conforme à des modes de réalisation de l'invention, par exemple tel que décrit en référence à la **Figure 1****.**

Dans cet exemple, l'architecture 500 comprend un bus de communication 505 auquel sont reliés :
- une unité de traitement -ou microprocesseur- notée CPU 510 (sigle de Central Processing Unit en anglais) ;
- une ou plusieurs mémoires non volatile 520 par exemple ROM (acronyme de Read Only Memory en anglais) pouvant comprendre un programme informatique comprenant des instructions pour la mise en oeuvre d'un procédé de prise de vues selon l'invention ; cette mémoire non volatile peut également être une mémoire EEPROM (acronyme de Electrically Erasable Read Only Memory en anglais) ou encore une mémoire Flash ; cette mémoire peut permettre de mémoriser temporairement les images capturées par les dispositifs d'acquisition du système pendant une durée prédéterminée, de sorte à permettre à l'opérateur de reconstruire une séquence vidéo *a posteriori ;*
- une mémoire vive ou mémoire cache ou mémoire volatile par exemple RAM 530 (acronyme de Random Access Memory en anglais) comprenant des registres adaptés à l'enregistrement des variables et paramètres créés et modifiés au cours de l'exécution du programme précité ; lors de la mise en oeuvre de l'invention, les codes d'instructions du programme stocké en mémoire non volatile (e.g. EEPROM ou flash) sont chargés en mémoire RAM en vue d'être exécutés par l'unité de traitement CPU ;
- une interface homme-machine IHM 540, par exemple un écran, un clavier, une souris, une manette (e.g. joystick ou volant), une ou plusieurs pédales, un écran tactile ou une télécommande ; cette interface I/O permet à un utilisateur (par exemple un cadreur) d'interagir avec le système au cours de la mise en œuvre du procédé via une interface graphique ;
- des interfaces d'entrée/sortie I/O 550 (pour Input/Output en anglais), afin de brancher les dispositifs d'acquisition du système (non représentés), et éventuellement un ou plusieurs équipements périphériques, par exemple un projecteur de lumière ;
- une interface de communication 560, adaptée à transmettre et à recevoir des données, par exemple via un réseau de télécommunications.

Le bus de communication 505 permet la communication et l'interopérabilité entre les différents éléments inclus dans le système ou reliés à lui. La représentation du bus n'est pas limitative et, notamment, l'unité de traitement 510 est susceptible de communiquer des instructions à tout élément du système directement ou par l'intermédiaire d'un autre élément de ce système.

Selon l'invention, l'unité de traitement 510 du système de prise de vues comprend un module de traitement d'images configuré pour :
- obtenir des images capturées en temps réel par les dispositifs d'acquisition 110, 120, 130, 140, 150, 160, 170, 180, 190, 195 via les interfaces d'entrée/sortie I/O 550 ;
- sélectionner, pour chaque instant d'une pluralité d'instants successifs, une partie de l'image capturée audit instant par un dispositif d'acquisition donné ; et
- reconstruire, à partir des parties d'image sélectionnées, une séquence vidéo similaire à celle qui aurait été capturée par un dispositif d'acquisition se déplaçant le long dudit parcours.

Dans certains modes de réalisation, le module de traitement est notamment configuré pour traiter les parties d'image sélectionnées afin d'éviter les sauts d'image entre deux instants successifs de la séquence vidéo. Aussi, ce module peut en outre être configuré pour corriger la distorsion optique des images capturées par les dispositifs d'acquisition.

Dans certains modes de réalisation, l'interface homme-machine 540 comprend des moyens de visualisation configurés pour afficher l'ensemble des dispositifs d'acquisition 110, 120, 130, 140, 150, 160, 170, 180, 190, 195 en association avec les images capturées par ces dispositifs d'acquisition. Elle peut également comprendre des moyens de commutation configurés pour commuter d'un dispositif d'acquisition donné à un autre de sorte à générer une commande de sélection à l'attention du module de traitement.

Ces moyens de commutation peuvent être configurés pour commuter d'un dispositif d'acquisition donné à un autre dispositif d'acquisition en fonction d'une partie d'image sélectionnée via l'interface homme-machine, et les moyens de visualisation peuvent afficher un élément de signalisation délimitant la partie d'image sélectionnée, comme représenté en traits discontinus sur la Figure 3.

Dans certains modes de réalisation, l'interface homme-machine peut être manipulée par plusieurs opérateurs à la fois ou le système peut comprendre plusieurs interfaces homme-machine. Dans ce cas, un ordre de priorité peut être institué pour prioriser certaines commandes par rapport à d'autres.

Dans certains modes de réalisation, certaines étapes peuvent être mises en oeuvre dans les dispositifs d'acquisition, tandis que d'autres étapes peuvent être mises en oeuvre par le système 500.

## Revendications

1. Procédé de prise de vues à l'aide d'un capteur virtuel pour le suivi d'un sportif ou d'un équipement sportif (105) se déplaçant à grande vitesse le long d'un parcours prédéterminé d'une scène (100), mis en œuvre dans un système de prise de vues (102) comprenant une pluralité de dispositifs d'acquisition (110, 120, 130, 140, 150, 160, 170, 180, 190, 195) d'images à champ large disposés chacun à une position fixe différente le long du parcours prédéterminé, de sorte que les images capturées à un instant donné par deux dispositifs d'acquisition différents représentent des points de vue différents du sportif ou de l'équipement sportif (105) évoluant sur le parcours prédéterminé, le procédé comprenant les étapes suivantes :
- capture (410) en temps réel d'images représentatives d'une zone de l'espace sensiblement équivalente au parcours prédéterminé, par chaque dispositif d'acquisition de ladite pluralité ;
- sélection (420, 430), pour chaque instant d'une pluralité d'instants successifs, d'un dispositif d'acquisition donné et d'une partie de l'image capturée par celui-ci audit instant ; et
- reconstruction (445), à partir des parties d'image sélectionnées, d'une séquence vidéo similaire à celle qui aurait été capturée par un dispositif d'acquisition se déplaçant le long dudit parcours.

2. Procédé selon la revendication 1, comprenant en outre une étape de traitement (440) des parties d'image sélectionnées afin d'éviter les sauts d'image entre deux instants successifs de la séquence vidéo.

3. Procédé selon la revendication 1 ou 2, comprenant en outre une étape de correction de la distorsion optique des images capturées par les dispositifs d'acquisition.

4. Procédé selon l'une quelconque des revendications 1 à 3, dans lequel la vitesse relative du sportif ou de l'équipement sportif et du capteur virtuel varie au cours de la séquence vidéo reconstruite.

5. Procédé selon l'une quelconque des revendications 1 à 4, comprenant en outre une étape de mémorisation dans le système (102) pendant une durée prédéterminée desdites images capturées, afin de permettre la mise en œuvre ultérieure de nouvelles étapes de sélection (420, 430) et de reconstruction (445), à partir des images mémorisées.

6. Procédé selon l'une quelconque des revendications 1 à 5, comprenant une étape préliminaire (400) de mise en place du système de prise de vues comprenant les étapes suivantes :
- l'installation des dispositifs d'acquisition de la pluralité le long du parcours prédéterminé, de sorte que chaque dispositif d'acquisition filme une zone de l'espace sensiblement équivalente au parcours prédéterminé, et de sorte que les images capturées à un instant donné par deux dispositifs d'acquisition différents représentent des points de vue différents du sportif ou de l'équipement sportif évoluant sur le parcours prédéterminé ; et
- le paramétrage d'un dispositif de traitement d'images auquel chaque dispositif d'acquisition de la pluralité est connecté, avec des données de position relative des dispositifs d'acquisition de la pluralité.

7. Système de prise de vues (102) à l'aide d'un capteur virtuel pour le suivi d'un sportif ou d'un équipement sportif (105) se déplaçant à grande vitesse le long d'un parcours prédéterminé d'une scène (100), le système (102) comprenant :
- une pluralité de dispositifs d'acquisition (110, 120, 130, 140, 150, 160, 170, 180, 190, 195) d'images à champ large disposés chacun à une position fixe différente le long du parcours prédéterminé, de sorte que les images capturées à un instant donné par deux dispositifs d'acquisition différents représentent des points de vue différents du sportif ou de l'équipement sportif (105) évoluant sur le parcours prédéterminé, chaque dispositif d'acquisition comprenant des moyens de capture en temps réel d'images représentative d'une zone de l'espace sensiblement équivalente au parcours prédéterminé ;
- un dispositif de traitement d'images (510) configuré pour :
∘ obtenir des images capturées en temps réel par les dispositifs d'acquisition ;
∘ sélectionner, pour chaque instant d'une pluralité d'instants successifs, une partie de l'image capturée audit instant par un dispositif d'acquisition donné ; et
∘ reconstruire, à partir des parties d'image sélectionnées, une séquence vidéo similaire à celle qui aurait été capturée par un dispositif d'acquisition se déplaçant le long dudit parcours.

8. Système de prise de vues (102) selon la revendication 7, dans lequel le dispositif de traitement (510) est en outre configuré pour traiter les parties d'image sélectionnées afin d'éviter les sauts d'image entre deux instants successifs de la séquence vidéo.

9. Système de prise de vues (102) selon la revendication 7 ou 8, dans lequel le dispositif de traitement (510) est en outre configuré pour corriger la distorsion optique des images capturées par les dispositifs d'acquisition (110, 120, 130, 140, 150, 160, 170, 180, 190, 195).

10. Système de prise de vues (102) selon l'une quelconque des revendications 7 à 9, comprenant en outre une interface homme-machine (540) comprenant des moyens de visualisation configurés pour afficher l'ensemble des dispositifs d'acquisition (110, 120, 130, 140, 150, 160, 170, 180, 190, 195) en association avec les images capturées par ces dispositifs d'acquisition.

11. Système de prise de vues (102) selon la revendication 10, dans lequel l'interface homme-machine comprend en outre des moyens de commutation configurés pour commuter d'un dispositif d'acquisition donné à un autre de sorte à générer une commande de sélection à l'attention du dispositif de traitement.

12. Système de prise de vues (102) selon la revendication 11, dans lequel les moyens de commutation sont configurés pour commuter d'un dispositif d'acquisition donné à un autre dispositif d'acquisition en fonction d'une partie d'image sélectionnée via l'interface homme-machine (540), les moyens de visualisation étant en outre configurés pour afficher un élément de signalisation délimitant la partie d'image sélectionnée.

## Patentansprüche

1. Verfahren zum Aufnehmen von Bildern mittels eines virtuellen Sensors zum Verfolgen eines Sportlers bzw. eines Sportgeräts (105), der/das sich mit hoher Geschwindigkeit entlang einer vorbestimmten Strecke einer Szene (100) fortbewegt, wobei das Verfahren in einem Bildaufnahmesystem (102) durchgeführt wird, das mehrere Erfassungseinrichtungen (110, 120, 130, 140, 150, 160, 170, 180, 190, 195) zum Erfassen von Weitwinkelbildern enthält, welche Einrichtungen jeweils an einer unterschiedlichen festen Position entlang der vorbestimmten Strecke angeordnet sind, so dass die zu einem gegebenen Zeitpunkt von zwei unterschiedlichen Erfassungseinrichtungen aufgenommenen Bilder unterschiedliche Ansichten des sich entlang der vorbestimmten Strecke fortbewegenden Sportlers bzw. Sportgeräts (105) darstellen, wobei das Verfahren die folgenden Schritte umfasst:
- Echtzeiterfassung (410) von Bildern, die für einen Raumbereich repräsentativ sind, der im Wesentlichen der vorbestimmten Strecke entspricht, mittels jeder der mehreren Erfassungseinrichtungen;
- für jeden Zeitpunkt von mehreren aufeinanderfolgenden Zeitpunkten Auswählen (420, 430) einer gegebenen Erfassungseinrichtung und eines Abschnitts des von dieser zu diesem Zeitpunkt aufgenommenen Bildes; und
- Rekonstruktion (445) einer Videosequenz aus den ausgewählten Bildabschnitten, die derjenigen ähnlich ist, die von einer sich entlang der Strecke fortbewegenden Erfassungseinrichtung aufgenommen worden wäre.

2. Verfahren nach Anspruch 1, ferner umfassend einen Schritt der Verarbeitung (440) der ausgewählten Bildabschnitte, um Bildsprünge zwischen zwei aufeinanderfolgenden Zeitpunkten der Videosequenz zu vermeiden.

3. Verfahren nach Anspruch 1 oder 2, ferner umfassend einen Schritt der Korrektur der optischen Verzerrung der von den Erfassungseinrichtungen aufgenommenen Bilder.

4. Verfahren nach einem der Ansprüche 1 bis 3, wobei die Relativgeschwindigkeit des Sportlers bzw. des Sportgeräts und des virtuellen Sensors während der rekonstruierten Videosequenz variiert.

5. Verfahren nach einem der Ansprüche 1 bis 4, ferner umfassend einen Schritt des Speicherns der aufgenommenen Bilder in dem System (102) für eine vorbestimmte Dauer, um die nachträgliche Ausführung erneuter Schritte des Auswählens (420, 430) und Rekonstruierens (445) aus den gespeicherten Bildern zu ermöglichen.

6. Verfahren nach einem der Ansprüche 1 bis 5, umfassend einen vorhergehenden Schritt (400) des Einrichtens des Bildaufnahmesystems, der die folgenden Schritte umfasst:
- Installieren der mehreren Erfassungseinrichtungen entlang der vorbestimmten Strecke, so dass jede Erfassungseinrichtung einen Raumbereich filmt, der im Wesentlichen der vorbestimmten Strecke entspricht, und so, dass die zu einem gegebenen Zeitpunkt von zwei verschiedenen Erfassungseinrichtungen aufgenommenen Bilder verschiedene Ansichten des sich entlang der vorbestimmten Strecke fortbewegenden Sportlers bzw. Sportgeräts darstellen; und
- Parametrieren einer Bildverarbeitungseinrichtung, an die jede der mehreren Erfassungseinrichtungen angeschlossen ist, mit relativen Positionsdaten der mehreren Erfassungseinrichtungen.

7. System (102) zum Aufnehmen von Bildern mittels eines virtuellen Sensors zum Verfolgen eines Sportlers bzw. eines Sportgeräts (105), der/das sich mit hoher Geschwindigkeit entlang einer vorbestimmten Strecke einer Szene (100) fortbewegt, wobei das System (102) enthält:
- mehrere Erfassungseinrichtungen (110, 120, 130, 140, 150, 160, 170, 180, 190, 195) zum Erfassen von Weitwinkelbildern, welche Einrichtungen jeweils an einer unterschiedlichen festen Position entlang der vorbestimmten Strecke angeordnet sind, so dass die zu einem gegebenen Zeitpunkt von zwei unterschiedlichen Erfassungseinrichtungen aufgenommenen Bilder unterschiedliche Ansichten des sich entlang der vorbestimmten Strecke fortbewegenden Sportlers bzw. Sportgeräts (105) darstellen, wobei jede Erfassungseinrichtung Mittel zur Echtzeiterfassung von Bildern enthält, die für einen Raumbereich repräsentativ sind, der im Wesentlichen der vorbestimmten Strecke entspricht;
- eine Bildverarbeitungseinrichtung (510), die dazu ausgelegt ist,
• Bilder zu erhalten, die in Echtzeit von den Erfassungseinrichtungen aufgenommen werden;
• für jeden Zeitpunkt von mehreren aufeinanderfolgenden Zeitpunkten einen Abschnitt des zu diesem Zeitpunkt von einer gegebenen Erfassungseinrichtung aufgenommen Bildes auszuwählen; und
• Rekonstruieren einer Videosequenz aus den ausgewählten Bildabschnitten, die derjenigen ähnlich ist, die von einer sich entlang der Strecke fortbewegenden Erfassungseinrichtung aufgenommen worden wäre.

8. Bildaufnahmesystem (102) nach Anspruch 7, wobei die Verarbeitungseinrichtung (510) ferner dazu ausgelegt ist, die ausgewählten Bildabschnitte zu verarbeiten, um Bildsprünge zwischen zwei aufeinanderfolgenden Zeitpunkten der Videosequenz zu vermeiden.

9. Bildaufnahmesystem (102) nach Anspruch 7 oder 8, wobei die Verarbeitungseinrichtung (510) ferner dazu ausgelegt ist, die optische Verzerrung der mittels der Erfassungseinrichtungen (1 10, 120, 130, 140, 150, 160, 170, 180, 190, 195) aufgenommenen Bilder zu korrigieren.

10. Bildaufnahmesystem (102) nach einem der Ansprüche 7 bis 9, ferner enthaltend eine Mensch-Maschine-Schnittstelle (540), die Anzeigemittel enthält, die dazu ausgelegt sind, die gesamten Erfassungseinrichtungen (110, 120, 130, 140, 150, 160, 170, 180, 190, 195) in Verbindung mit den von diesen Erfassungseinrichtungen aufgenommenen Bildern anzuzeigen.

11. Bildaufnahmesystem (102) nach Anspruch 10, wobei die Mensch-Maschine-Schnittstelle ferner Umschaltmittel enthält, die dazu ausgelegt sind, von einer gegebenen Erfassungseinrichtung zu einer anderen umzuschalten, so dass ein Auswahlbefehl an die Verarbeitungseinrichtung erzeugt wird.

12. Bildaufnahmesystem (102) nach Anspruch 11, wobei die Umschaltmittel dazu ausgelegt sind, von einer gegebenen Erfassungseinrichtung zu einer anderen Erfassungseinrichtung in Abhängigkeit von eines über die Mensch-Maschine-Schnittstelle (540) ausgewählten Bildabschnitts umzuschalten, wobei die Anzeigemittel ferner dazu ausgelegt sind, ein Signalelement anzuzeigen, das den ausgewählten Bildabschnitt abgrenzt.

## Claims

1. Image capture method using a virtual sensor for tracking a sportsperson or sports equipment (105) moving at high speed along a predetermined course of a scene (100), implemented in an image capture system (102) comprising a plurality of wide-field image acquisition devices (110, 120, 130, 140, 150, 160, 170, 180, 190, 195) each arranged at a different fixed position along the predetermined course, so that the images captured at a given instant by two different acquisition devices represent different viewpoints of the sportsperson or sports equipment (105) moving over the predetermined course, the method comprising the following steps:
- capturing (410), in real time, images representative of a zone of space substantially equivalent to the predetermined course, by each acquisition device of said plurality;
- selecting (420, 430), for each instant of a plurality of successive instants, a given acquisition device and a portion of the image captured by the latter at said instant; and
- reconstructing (445), from the selected image portions, a video sequence similar to that which would have been captured by an acquisition device moving along said course.

2. Method according to claim 1, further comprising a step of processing (440) the selected image portions in order to avoid image jumping between two successive instants of the video sequence.

3. Method according to claim 1 or 2, further comprising a step of correcting the optical distortion of the images captured by the acquisition devices.

4. Method according to any one of claims 1 to 3, wherein the relative speed of the sportsperson or sports equipment and the virtual sensor varies during the reconstructed video sequence.

5. Method according to any one of claims 1 to 4, further comprising a step of storing said captured images in the system (102), for a predetermined duration, in order to allow subsequent execution of new steps of selection (420, 430) and of reconstruction (445), from the stored images.

6. Method according to any one of claims 1 to 5, comprising a preliminary step (400) of setting up the image capture system comprising the following steps:
- installing the acquisition devices of the plurality along the predetermined course, in such a way that each acquisition device films a zone of space substantially equivalent to the predetermined course, and in such a way that the images captured at a given instant by two different acquisition devices represent different viewpoints of the sportsperson or sports equipment moving over the predetermined course; and
- parameterizing an image processing device to which each acquisition device of the plurality is connected, with data of relative position of the acquisition devices of the plurality.

7. Image capture system (102) using a virtual sensor for tracking a sportsperson or sports equipment (105) moving at high speed along a predetermined course of a scene (100), the system (102) comprising:
- a plurality of wide-field image acquisition devices (110, 120, 130, 140, 150, 160, 170, 180, 190, 195) each arranged at a different fixed position along the predetermined course, so that the images captured at a given instant by two different acquisition devices represent different viewpoints of the sportsperson or sports equipment (105) moving over the predetermined course, each acquisition device comprising means for capturing, in real time, images representative of a zone of space substantially equivalent to the predetermined course;
- an image processing device (510) configured for:
∘ obtaining images captured in real time by the acquisition devices;
∘ selecting, for each instant of a plurality of successive instants, a portion of the image captured at said instant by a given acquisition device; and
∘ reconstructing, from the selected image portions, a video sequence similar to that which would have been captured by an acquisition device moving along said course.

8. Image capture system (102) according to claim 7, in which the processing device (510) is in addition configured for processing the selected image portions in order to avoid image jumping between two successive instants of the video sequence.

9. Image capture system (102) according to claim 7 or 8, in which the processing device (510) is in addition configured for correcting the optical distortion of the images captured by the acquisition devices (110, 120, 130, 140, 150, 160, 170, 180, 190, 195).

10. Image capture system (102) according to any one of claims 7 to 9, further comprising a human-machine interface (540) comprising display means configured for displaying all of the acquisition devices (110, 120, 130, 140, 150, 160, 170, 180, 190, 195) together with the images captured by these acquisition devices.

11. Image capture system (102) according to claim 10, in which the human-machine interface further comprises switching means configured for switching from a given acquisition device to another so as to generate a selection command for the attention of the processing device.

12. Image capture system (102) according to claim 11, in which the switching means are configured for switching from a given acquisition device to another acquisition device as a function of an image portion selected via the human-machine interface (540), the display means being additionally configured for displaying a signalling element delimiting the image portion selected.
